# EUROPEAN PATENT APPLICATION

(11) **EP 4 722 395 A1**
(43) Date of publication of application: **08.04.2026**
(21) Application number: 25198471.2
(22) Date of filing: 27.08.2025
(51) Int. Cl.: C22B 1/00, C22B 3/04, C22B 3/44, C22B 7/00, C22B 21/00, C22B 26/12, C22B 1/02, H01M 10/54

(54) **METHOD FOR RECYCLING POSITIVE ELECTRODE MATERIAL**

(30) Priority: 17.09.2024 JP 2024160049
(71) Applicant: Prime Planet Energy & Solutions, Inc., Chuo-ku, Tokyo 103-0022 (JP)
(72) Inventor: SUZUKI, Shinya, Tokyo, 103-0022 (JP); TSUJIKO, Akira, Tokyo, 103-0022 (JP)
(74) Representative: Kuhnen & Wacker Patent- und Rechtsanwaltsbüro PartG mbB

(57) **Abstract**

The present disclosure provides a new method capable of separating Li and Al from waste of at least a positive electrode. A method for recycling a positive electrode material according to the present disclosure includes bringing waste of at least a positive electrode containing Li and Al into contact with water under presence of pressurized CO₂ to allow Li and Al to leach into the water.

## Description

### TECHNICAL FIELD

The present disclosure relates to a method for recycling a positive electrode material.

### BACKGROUND ART

Lithium ion secondary batteries are widely used in various fields as power supplies for driving vehicles, portable power supplies, and other applications. In recent years, material recycling of used lithium ion secondary batteries has been promoted from the perspective of SDGs. In lithium ion secondary batteries, various metal elements are used, and as an example of material recycling, separation of metal elements contained in used lithium ion secondary batteries is carried out.

For example, Patent Document 1 describes that a metal containing lithium is leached with acid from waste of a lithium ion secondary battery and lithium is finally collected. In Non-patent Document 1, a leaching solution containing ammonia and ammonium sulfate, and sodium sulfite as a reducing agent are used to selectively separate Li, Ni, and Co from Li, Ni, Co, Mn, and Al contained in waste of a positive electrode of a used lithium ion secondary battery.

### CITATION LIST

### Patent Document

Patent Document 1: Japanese Patent No. 7185090

### Non-patent Document

Non-patent Document 1: Waste Management, February 2017, vol. 60, pp. 680-688

### SUMMARY OF INVENTION

Metal elements contained in waste of a positive electrode of a used lithium ion secondary battery are generally transition metal elements such as Ni, Co, and Mn and Li derived from a positive electrode active material, and Al derived from a positive electrode current collector. The positive electrode active material is generally produced by mixing a lithium compound as a lithium source and a hydroxide containing transition metal elements and firing the mixture. Thus, Li and transition metal elements such as Ni, Co, and Mn are desirably collected and recycled separately, but in conventional techniques, transition metal elements such as Ni, Co, and Mn are leached simultaneously with Li, and thus, the number of subsequent separation steps increases disadvantageously.

It is therefore an object of the present disclosure to provide a new method capable of separating Li and Al from waste of at least a positive electrode.

A method for recycling a positive electrode material according to the present disclosure includes bringing waste of at least a positive electrode containing Li and Al into contact with water under presence of pressurized CO₂ to allow Li and Al to leach into the water.

This configuration provides a new method capable of separating Li and Al from waste of at least a positive electrode.

### BRIEF DESCRIPTION OF DRAWINGS

[FIG. 1] FIG. 1 is a flowchart showing each of steps of a method for recycling a positive electrode material according to the present disclosure.
[FIG. 2] FIG. 2 is a longitudinal cross-sectional view schematically illustrating an internal structure of an example of a lithium ion secondary battery.
[FIG. 3] FIG. 3 is a schematic disassembled view illustrating a configuration of an electrode body of the lithium ion secondary battery shown in FIG. 2.
[FIG. 4] FIG. 4 is a schematic cross-sectional view of a positive electrode of the lithium ion secondary battery shown in FIG. 2.

### DESCRIPTION OF EMBODIMENTS

Embodiments of the present disclosure will be described hereinafter with reference to the drawings. Matters not specifically mentioned herein but required for carrying out the present disclosure can be understood as matters of design of a person skilled in the art based on related art in the field. The present disclosure can be carried out on the basis of the contents disclosed in the description and common general knowledge in the field. In the drawings, members and parts having the same functions are denoted by the same reference characters for description. Dimensional relationships (e.g., length, width, and thickness) in the drawings do not necessarily reflect actual dimensional relationships. It should be noted that a numerical range expressed as "A to B" herein includes A and B.

It should be noted that a "secondary battery" herein refers to a power storage device capable of being repeatedly charged and discharged. A "lithium ion secondary battery" herein refers to a secondary battery that uses lithium ions as charge carriers and performs charge and discharge by movement of charges accompanying lithium ions between positive and negative electrodes.

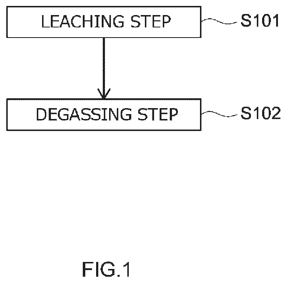

As illustrated in FIG. 1, a method for recycling a positive electrode material according to the present disclosure includes, as an essential step, the step of bringing waste of at least a positive electrode containing Li and Al into contact with water under the presence of pressurized CO₂ to allow Li and Al to leach into the water (hereinafter also referred to as a "leaching step") S101. The method for recycling a positive electrode material according to the present disclosure may further include, as an optional step, the step of precipitating Al by removing CO₂ dissolved in the water in which Li and Al are leached, from the water (hereinafter also referred to as a "degassing step") S102.

### <Lithium Ion Secondary Battery>

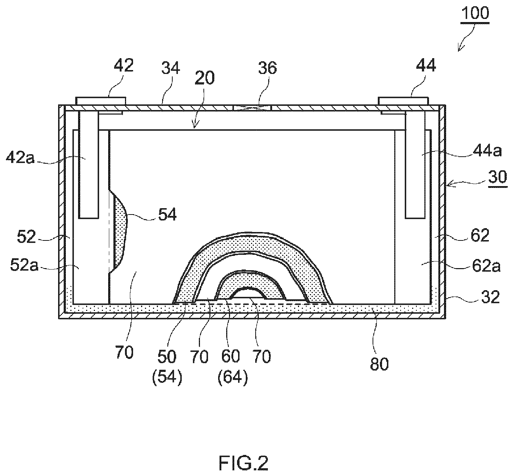

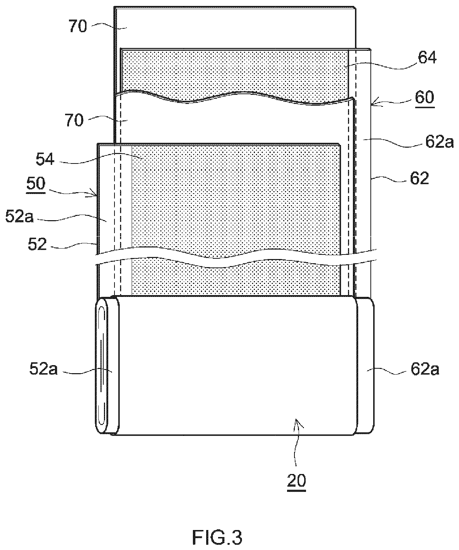

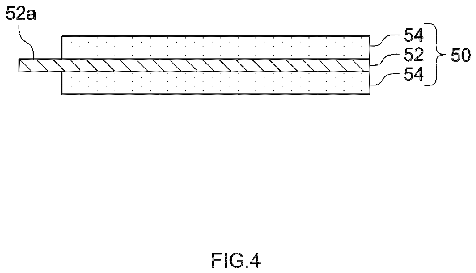

First, a method for recycling a positive electrode material according to the present disclosure relates to material recycling of a secondary battery (especially lithium ion secondary battery). First, a general configuration example of a lithium ion secondary battery will be described. FIGS. 2 and 3 illustrate an example of a configuration of a lithium ion secondary battery. FIG. 2 is a longitudinal cross-sectional view schematically illustrating an internal structure of an example of a lithium ion secondary battery. FIG. 3 is a disassembled view schematically illustrating an electrode body of the lithium ion secondary battery shown in FIG. 2. FIG. 4 is a schematic cross-sectional view taken along the thickness direction of a positive electrode of the lithium ion secondary battery shown in FIG. 2. It should be noted that the following description of the lithium ion secondary battery is for convenience of understanding, and does not limit the method for recycling a positive electrode material of the present disclosure.

As illustrated in FIG. 2, a lithium ion secondary battery 100 is a sealed battery in which a flat electrode body 20 and a nonaqueous electrolyte (not shown) are housed in a battery case 30. As illustrated in FIG. 2, the battery case 30 includes an outer case 32 housing the electrode body 20, and a lid 34 sealing an opening of the outer case 32. The outer case 32 and the lid 34 are sealed by welding such as laser welding. Examples of a material for the battery case 30 include aluminum, an aluminum alloy, and resin.

In the illustrated example, the battery case 30 is rectangular. The shape of the battery case 30 is, however, not limited to this example, and may be, for example, cylindrical. Alternatively, the battery case 30 may be a laminated case including a gas barrier layer such as an aluminum layer and a sealant layer including a thermoplastic resin, for example.

The battery case 30 includes a positive electrode terminal 42 and a negative electrode terminal 44 for external connection. The battery case 30 also includes a safety valve 36 configured to release the internal pressure of the battery case 30 when the internal pressure increases to a predetermined level or more. The battery case 30 has an injection port (not shown) for injecting the nonaqueous electrolyte. The positive electrode terminal 42 is electrically connected to a positive electrode current collector plate 42a. The negative electrode terminal 44 is electrically connected to a negative electrode current collector plate 44a.

As illustrated in FIGS. 2 and 3, the electrode body 20 has a configuration in which an elongated positive electrode sheet 50 and an elongated negative electrode sheet 60 are stacked with two long separator sheets 70 interposed therebetween and wound in the longitudinal direction. Therefore, in this embodiment, the electrode body 20 is a wound electrode body. The electrode body 20 is, however, not limited to this example, and may be a stacked-type electrode body in which a plurality of positive electrodes and a plurality of negative electrodes are alternately stacked with separators interposed therebetween.

As illustrated in FIGS. 2 and 4, in the positive electrode sheet 50, a positive electrode active material layer 54 is formed on one or each (each in this example) surface of a positive electrode current collector 52 along the longitudinal direction. The positive electrode sheet 50 includes a positive electrode active material layer non-formed portion 52a in which the positive electrode active material layer 54 is not formed and the positive electrode current collector 52 is exposed. The positive electrode current collector plate 42a is joined to the positive electrode active material layer non-formed portion 52a.

Examples of the positive electrode current collector 52 constituting the positive electrode sheet 50 include aluminum foil. The positive electrode active material layer 54 contains a positive electrode active material. Examples of the positive electrode active material include lithium composite metal oxides (e.g., lithium manganese composite oxide, lithium nickel manganese composite oxide, lithium nickel cobalt manganese composite oxide, and lithium nickel cobalt aluminum composite oxide) and lithium transition metal phosphate compounds (e.g., lithium iron phosphate). The positive electrode active material layer 54 may include conductive materials (e.g., carbon black and carbon nanotubes), binders (e.g., polyvinylidene fluoride), and the like.

The content of the positive electrode active material in the positive electrode active material layer 54 is desirably 70% by mass or more, more desirably 85% by mass or more and 99% by mass or less. The content of the conductive material in the positive electrode active material layer 54 is desirably 0.1 % by mass or more and 20 % by mass or less, more desirably 0.3 % by mass or more and 15 % by mass or less. The content of the binder in the positive electrode active material layer 54 is desirably 0.4 % by mass or more and 15 % by mass or less, more desirably 0.5 % by mass or more and 10 % by mass or less.

As illustrated in FIG. 3, in the negative electrode sheet 60, a negative electrode active material layer 64 is formed on one or each (each in this example) surface of a negative electrode current collector 62 along the longitudinal direction. The negative electrode sheet 60 includes a negative electrode active material layer non-formed portion 62a in which the negative electrode active material layer 64 is not formed and the negative electrode current collector 62 is exposed. The negative electrode current collector plate 44a is joined to the negative electrode active material layer non-formed portion 62a.

Examples of the negative electrode current collector 62 constituting the negative electrode sheet 60 include copper foil. The negative electrode active material layer 64 contains a negative electrode active material. Examples of the negative electrode active material include carbon-based negative electrode active materials (e.g., graphite, hard carbon, and soft carbon) and silicon-based negative electrode active materials (e.g., silicon and silicon oxide). The negative electrode active material layer 64 may include a binder (e.g., styrenebutadiene rubber (SBR)), a thickener (e.g., carboxymethyl cellulose (CMC)), and so forth.

The content of graphite in the negative electrode active material layer 64 is desirably 90 % by mass or more, more desirably 95 % by mass or more and 99 % by mass or less. The content of the binder in the negative electrode active material layer 64 is desirably 0.1 % by mass or more and 8 % by mass or less, more desirably 0.5 % by mass or more and 3 % by mass or less. The content of the thickener in the negative electrode active material layer 64 is desirably 0.3 % by mass or more and 3 % by mass or less, more desirably 0.5 % by mass or more and 2 % by mass or less.

Examples of the separators 70 include a porous resin sheet of polyethylene, polypropylene, and the like. The porous sheet may have a single-layer structure or a multilayer structure. A heat-resistance layer (HRL) may be provided on a surface of each separator 70.

The nonaqueous electrolyte typically includes a nonaqueous solvent and a supporting electrolyte (i.e., electrolyte salt). Examples of the nonaqueous solvent include carbonates (e.g., ethylene carbonate, ethyl methyl carbonate, dimethyl carbonate), esters, and ethers. Examples of the supporting electrolyte include lithium salts such as LiPF₆. The concentration of the supporting electrolyte is not particularly limited, and is desirably 0.7 mol/L to 1.3 mol/L. The nonaqueous electrolyte may include various additives such as a gas generating agent and a film forming agent. It should be noted that in this embodiment, a nonaqueous electrolyte is used as the electrolyte, but the electrolyte may be a solid electrolyte.

The lithium ion secondary battery 100 is used for, for example, power supply applications such as in-vehicle application (i.e., for a power supply for driving vehicles such as battery electric vehicles (BEVs), hybrid electric vehicles (HEVs), and plug-in hybrid electric vehicles (PHEVs)), and for a power supply for electronic equipment.

As described above, Li is used as a constituent element of the positive electrode active material in the lithium ion secondary battery. In addition, transition metal elements such as Ni, Co, and Mn may be used as constituent elements of the positive electrode active material. Al may be used as a constituent element of the positive electrode active material. Al is generally used for the positive electrode current collector. Thus, the positive electrode generally contains Li and Al. In addition, in the lithium ion secondary battery, Li is used for the nonaqueous electrolyte. Additionally, aluminum may be used for the battery case.

### <Leaching Step S101>

In the leaching step, waste of at least a positive electrode containing Li and Al is used. That is, the waste used in the leaching step includes waste of at least a positive electrode containing Li and Al, and may further include waste of a negative electrode and waste of other battery members (e.g., battery case). The waste may be subjected to some treatment (e.g., roasting treatment). Examples of the waste include waste of a positive electrode deemed defective in manufacturing, waste of an electrode body deemed defective in manufacturing, waste of a positive electrode extracted from a used lithium ion secondary battery, waste of an electrode body extracted from a used lithium ion secondary battery, and black mass from a used lithium ion secondary battery (in particular, black mass obtained by crushing and roasting a used lithium ion secondary battery). These types of waste are obtained by a known method.

The waste desirably contains at least one of Li or Al as a metal, more desirably contains both Li and Al as metals. From this viewpoint, the waste is desirably subjected to reduction-roasting. The waste is desirably black mass obtained by crushing and roasting a used lithium ion secondary battery.

Specifically, for example, the black mass may be obtained by crushing a lithium ion secondary battery according to a known method and, when necessary, subjected to sieving, and roasted at 400°C to 1500°C (desirably 700°C to 1000°C) in an atmosphere (especially, an atmosphere of inert gas such as argon gas and nitrogen gas) with an oxygen concentration of 5 % by volume or less (desirably 1 % by volume or less) for 1 hour to 24 hours (desirably 4 hours to 12 hours).

The waste may further contain an element (particularly a metal element) other than Li and Al. For example, the waste may further contain at least one transition metal element selected from the group consisting of Ni, Co, and Mn, in addition to Li and Al. The waste may further contain Cu. In particular, in a case where the waste is waste of a lithium ion secondary battery or an electrode body, the waste generally further contains Cu derived from a negative electrode current collector.

In the leaching step S101, the waste is brought into contact with water under the presence of pressurized CO₂, and thereby, Li and Al are leached into water from the waste.

Since pressurized CO₂ is used, a pressure resistant container is usually used in the leaching step S101. The pressure resistant container may be a known pressure resistant container used for chemical reactions. Specific examples of the pressure resistant container include autoclaves, pressurization tanks, and pressurization chambers. The pressure resistant container desirably includes a stirring device such as a stirring blade or a magnetic stirrer. The pressure resistant container desirably includes a heating device such as a heater. The pressure resistant container desirably includes a temperature measuring device such as a thermometer or a temperature sensor.

In the leaching step S101, at least water is used as a leaching liquid. Water may contain other components within the range that does not inhibit the effects of the present disclosure. Examples of the other components include pH adjusters such as ammonia, ammonium carbonate, ammonium hydrogen carbonate, and ammonium sulfate. Water desirably contains ammonia and any one of ammonium carbonate, ammonium hydrogen carbonate, and ammonium sulfate. In this case, the waste desirably further contains at least one transition metal element selected from the group consisting of Ni, Co, and Mn.

The leaching step S101 can be performed, for example, in the following manner. For example, first, waste and water are fed into a pressure resistant container, and the container is sealed. Next, pressurized CO₂ is introduced into the pressure resistant container. The introduction of pressurized CO₂ into the pressure resistant container may be performed according to a known method. Specifically, for example, the pressure resistant container and a carbon dioxide gas cylinder are connected while a booster pump, a valve, a pressure gauge, and so forth are provided in a flow path of liquefied CO₂/CO₂ gas. Then, CO₂ is introduced into the pressure resistant container from the carbon dioxide gas cylinder at a predetermined pressure. After the introduction of pressurized CO₂, leaching is performed for a predetermined time.

The pressure of CO₂ is not particularly limited as long as the pressure of CO₂ is higher than atmospheric pressure (i.e., 1.013 × 10⁵ Pa). Additionally, Li is originally easy to dissolve in water. On the other hand, the dissolution of CO₂ in water makes it easier for Al to dissolve in water. This is considered to be because the dissolution of CO₂ in water causes a local pH decrease and generates an acidic condition. Therefore, the pressure of CO₂ is desirably 0.5 MPa or more, more desirably 3 MPa or more, even more desirably 7.38 MPa or more, and particularly desirably 10 MPa or more. The pressure of CO₂ may be 30 MPa or less, 20 MPa or less, or 15 MPa or less.

The leaching temperature is not particularly limited, and may be room temperature (i.e., 1°C to 30°C). The leaching may be performed under heating. In this case, the leaching temperature is desirably 31.1°C or more, more desirably 45°C or more, even more desirably 60°C or more. The leaching temperature may be 90°C or less, 85°C or less, or 80°C or less.

It should be noted that the pressurized CO₂ may be in a supercritical state. In this case, leaching of Li and Al can be promoted. Thus, it is particularly desirable that the pressure of CO₂ is 7.38 MPa or more (especially 8 MPa to 20 MPa) and the leaching temperature is 31.1°C or more (especially 45°C to 85°C).

To promote leaching of Li and Al, stirring is desirably performed during leaching. The stirring speed is not particularly limited, and is desirably 200 rpm or more, more desirably 300 rpm or more, even more desirably 400 rpm or more. The stirring speed may be 2000 rpm or less, or 1000 rpm or less.

The leaching time is not particularly limited, and may be determined as appropriate depending on the amount of water, the amount of waste, the leaching temperature, the CO₂ pressure, and so forth. To allow CO₂ to sufficiently dissolve in water, the leaching time is desirably 2 hours or more, more desirably 3 hours or more. From the viewpoint of working efficiency, the leaching time is desirably 24 hours or less, more desirably 12 hours or less, even more desirably 6 hours or less.

In the manner described above, the leaching step S101 can be carried out. Through the leaching step S101, Li and Al can be leached from waste (i.e., solid-liquid extraction can be performed) at a high leaching rate. Accordingly, in the leaching step S101, water containing Li and Al (i.e., leachate) is obtained. It should be noted that in this water, CO₂ is dissolved.

Here, in a case where the waste further contains at least one transition metal element selected from the group consisting of Ni, Co, and Mn, these transition metal elements remain in the solid phase and hardly remain in the leachate. This is considered to be because CO₂ dissolved in water becomes carbonate ions, and even if these transition metal elements dissolve, the transition metal elements form carbonates and remain in the solid phase. As described in Non-patent Document 1, it is considered that in a case where water (i.e., leaching liquid) contains ammonia and ammonium carbonate, these transition metal elements dissolve in the leachate, but this dissolution of CO₂ promotes carbonate formation. Therefore, according to the method of the present disclosure, it is possible to selectively leach Li and Al at a high selection rate from waste containing at least one transition metal element selected from the group consisting of Ni, Co, and Mn, as well as Li, and Al.

Thus, from another aspect, the method for recycling a positive electrode material according to the present disclosure is applicable as a method for separating at least one transition metal element selected from the group consisting of Ni, Co, and Mn from waste of at least the positive electrode containing Li, Al, and the at least one transition metal element selected from the group consisting of Ni, Co, and Mn.

### <Degassing Step S102>

In the degassing step S102, Al is precipitated by removing CO₂ dissolved in water in which Li and Al are leached, from the water. This precipitation of Al is considered to be due to a pH change caused by removing CO₂ from water. The step can be performed, for example, by placing water in which Li and Al are leached, under a reduced pressure to detach CO₂ from the water.

The pressure reduction can be performed according to a known method. For example, the pressure reduction can be performed by feeding water in which Li and Al are leached into a decompression container or a vacuum container, and then using a vacuum pump or the like. Alternatively, for example, the pressure reduction can be performed using a rotary evaporator.

The pressure in the degassing step S102 is not particularly limited as long as the pressure is lower than atmospheric pressure (i.e., 1.013 × 10⁵ Pa). The pressure is desirably 1×10⁴ Pa or less, more desirably 1×10³ Pa or less. The pressure may be 1×10⁻¹ Pa or more.

The time in the degassing step S102 may be appropriately determined depending on the pressure, and is, for example, 5 minutes to 24 hours, desirably 10 minutes to 6 hours, more desirably 20 minutes to 2 hours.

An Al compound can be precipitated by removing CO₂ from water. On the other hand, Li remains in water. Thus, Li and Al can be separated from each other. Specifically, a solid content containing Al and water containing Li can be separated by a known solid-liquid separation method (e.g., filtration).

From the solid content containing Al, Al can be collected in the form of a desired aluminum compound or as metallic Al according to a known method. From water containing Li, Li can be collected in the form of a desired lithium compound or as metallic Li according to a known method.

As described above, according to the method of the present disclosure, Li and Al can be selectively collected at a high selection rate. The method of the present disclosure has an advantage in that it can be performed in a small number of steps. The method of the present disclosure is applicable as a method for producing Li that includes the leaching step S101 and the degassing step S102. Alternatively, the method of present disclosure is applicable as a method for producing Al that includes the leaching step S101 and the degassing step S102. The compound of transition metal element such as Ni, Co, or Mn remaining in the solid phase can be used as it is as a raw material for the positive electrode active material. In this manner, the method of the present disclosure is significantly useful in material recycling of lithium ion secondary batteries.

Hereinafter, test examples related to the present disclosure will be described in detail, but the present disclosure is not intended to be limited to those shown in the examples.

### [Comparative Example 1]

First, roasted black mass of a leach sample was prepared in the following procedure. A positive electrode including a positive electrode active material layer containing a lithium nickel cobalt manganese composite oxide (LiNi_{0.6}Co_{0.2}Mn_{0.2}O₂) on aluminum (Al) foil was crushed. The crushed material of the positive electrode was passed through a sieve with an aperture of 500 µm to produce positive electrode powder. A negative electrode including a negative electrode active material layer containing graphite on copper foil was crushed. The crushed material of the negative electrode was passed through a sieve with an aperture of 500 µm to produce negative electrode powder. The obtained positive electrode powder and negative electrode powder were mixed to obtain black mass. The black mass was roasted at 750°C for 6 hours under a low oxygen atmosphere, thereby obtaining roasted black mass in which most of metals was reduced.

Then, ammonia water with a concentration of 28 % by mass, and ammonium sulfate ((NH₄)₂SO₄) as a pH adjuster were mixed, thereby preparing an aqueous leaching agent.

The roasted black mass was added to the aqueous leaching agent. Thereafter, leaching was performed by stirring the resultant mixture at a stirring speed of 500 rpm for 3 hours while maintaining the temperature of the aqueous leaching agent at 80°C. Subsequently, solid-liquid separation was performed by filtration, thereby obtaining a leachate and a leach residue.

### [Comparative Example 2]

A leachate and a leach residue were obtained by a method similar to that of Comparative Example 1 except for using ammonium carbonate ((NH₄)₂CO₃) instead of an ammonium sulfate, in preparing an aqueous leaching agent.

### [Comparative Example 3]

A leachate and a leach residue were obtained by a method similar to Comparative Example 1 except for changing the time of ammonia leaching from 3 hours to 6 hours.

### [Example 1]

In a manner similar to Comparative Example 1, roasted black mass and an aqueous leaching agent were obtained. A pressure resistant container was supplied with an aqueous leaching agent and roasted black mass, and then filled with a CO₂ gas so that a pressure became 10 MPa. Then, the mixture was stirred at 80°C at a stirring speed of 500 rpm for 3 hours, thereby performing ammonia leaching. After the pressure in the pressure resistant container was reduced to atmospheric pressure, and solid-liquid separation was performed by filtration, thereby obtaining a leachate and a leach residue.

### [Leaching Rate Evaluation]

First, 1 g of roasted black mass used as a leach sample was dissolved in acid, and the resulting mixture was subjected to high-frequency inductively coupled plasma (ICP) emission spectroscopy. From spectroscopic results, the amounts of Li, Al, Ni, Co, and Mn in the roasted black mass were obtained. These metal amounts correspond to initial amounts before ammonia leaching.

Then, leachates obtained in the example and the comparative examples were subjected to ICP emission spectroscopy, and the amounts of Li, Al, Ni, Co, and Mn in the leachate were obtained. The leaching rates of Li, Al, Ni, Co, and Mn were obtained from the ratio (percentage) of the amounts of these metals in the leachate with respect to the initial amounts of the metals in the roasted black mass. Table 1 shows the results.

### [Table 1]

**Table 1**

| | Co2 Pressurization | Ammonium Source | Leaching Time (h) | Leaching Rate (%) | | | | |
|---|---|---|---|---|---|---|---|---|
| | | | | Li | Al | Ni | Co | Mn |
| Comparative Example 1 | Not applied | Ammonium Sulfate | 3 | 65 | <1 | 54 | 51 | <1 |
| Comparative Example 2 | Not applied | Ammonium Carbonate | 3 | 63 | <1 | 59 | 50 | <1 |
| Comparative Example 3 | Not applied | Ammonium Sulfate | 6 | 72 | <1 | 65 | 60 | <1 |
| Example 1 | Applied | Ammonium Sulfate | 3 | 99 | 98 | <1 | <1 | <1 |

The results in Table 1 indicate that by bringing waste containing Li and Al into contact with water under the presence of pressurized CO₂, Li and Al can be leached at a high leaching rate. The results in Table 1 further indicate that by bringing the waste containing Li and Al into contact with water under the presence of pressurized CO₂, it is possible to separate Ni, Co, and Mn from Li and Al with high selectivity. Therefore, according to the method for recycling a positive electrode material of the present disclosure, it can be understood that it is possible to separate Li and Al from waste of at least a positive electrode by implementing the leaching step S101.

### [Example 2]

The leachate obtained in Example 1 was degassed using a vacuum pump. Specifically, the leachate was transferred to a vacuum container, and the pressure inside the vacuum container was reduced to about 10³ Pa using the vacuum pump, and degassing was performed for 30 minutes. At this time, generation of bubbles from the leachate was observed. It was thus confirmed that CO₂ is released from the leachate. In addition, precipitation of solids was observed in the leachate. Solid-liquid separation was performed by filtration, thereby collecting the precipitate. The precipitate was dissolved in acid, and ICP emission spectroscopy was performed to determine the amount of metal. Table 2 shows results.

### [Table 2]

**Table 2**

| | Preceipitation Rate (%) | |
|---|---|---|
| | Li | Al |
| Example 2 | <1 | 99 |

The results in Table 2 indicate that by removing dissolved CO₂ from the leachate, Al can be precipitated, thereby allowing for separation of Li and Al. Thus, it can be understood that Li and Al can be separated by implementing the degassing step S102.

Specific examples of the present disclosure have been described in detail hereinbefore, but are merely illustrative examples, and are not intended to limit the scope of claims. The techniques described in claims include various modifications and changes of the above exemplified specific examples.

That is, the method for recycling a positive electrode material according to the present disclosure includes items [1] to [9].
[1] A method for recycling a positive electrode material, including bringing waste of at least a positive electrode containing Li and Al into contact with water under presence of pressurized CO₂ to allow Li and Al to leach into the water.
[2] The method of item [1] in which the water contains ammonia and either ammonium carbonate or ammonium sulfate.
[3] The method of item [1] or [2] in which the pressurized CO₂ is in a supercritical state.
[4] The method of any one of items [1] to [3] in which a pressure of the pressurized CO₂ is 8 MPa to 20 MPa, a leaching temperature is 45°C to 85°C, and a leaching time is 2 hours or more.
[5] The method of any one of items [1] to [4] in which the waste further contains at least one transition metal element selected from the group consisting of Ni, Co, and Mn.
[6] The method of any one of items [1] to [5] in which the waste contains Li and Al as metals.
[7] The method of any one of items [1] to [6] in which the waste is black mass obtained by crushing and roasting a used lithium ion secondary battery.
[8] The method of any one of items [1] to [7] further includes precipitating Al by removing CO₂ dissolved in the water in which Li and Al are leached, from the water.
[9] The method of item [8] in which the precipitating Al includes placing the water in which Li and Al are leached, under a reduced pressure.

## Claims

1. A method for recycling a positive electrode material, the method comprising
a step (S101) of bringing waste of at least a positive electrode (50) containing Li and Al into contact with water under presence of pressurized CO₂ to allow Li and Al to leach into the water.

2. The method according to claim 1, wherein the water contains ammonia and either ammonium carbonate or ammonium sulfate.

3. The method according to claim 1, wherein the pressurized CO₂ is in a supercritical state.

4. The method according to claim 1, wherein a pressure of the pressurized CO₂ is 8 MPa to 20 MPa, a leaching temperature is 45°C to 85°C, and a leaching time is 2 hours or more.

5. The method according to claim 1, wherein the waste further contains at least one transition metal element selected from the group consisting of Ni, Co, and Mn.

6. The method according to claim 1, wherein the waste contains Li and Al as metals.

7. The method according to claim 1, wherein the waste is black mass obtained by crushing and roasting a used lithium ion secondary battery (100).

8. The method according to claim 1, further comprising a step (S102) of precipitating Al by removing CO₂ dissolved in the water in which Li and Al are leached, from the water.

9. The method according to claim 8, wherein the step (S102) of precipitating Al includes placing the water in which Li and Al are leached, under a reduced pressure.
